# EUROPÄISCHE PATENTSCHRIFT

(11) **EP 1 029 018 B1**
(45) Veröffentlichungstag und Bekanntmachung des Hinweises auf die Patenterteilung: **05.09.2001**
(21) Anmeldenummer: 98954427.5
(22) Anmeldetag: 16.10.1998
(51) Int. Cl.: C09K 5/06, B01J 13/14, C04B 20/10

(54) **VERWENDUNG VON MIKROKAPSELN ALS LATENTWÄRMESPEICHER**
APPLICATION OF MICROCAPSULES AS LATENT HEAT ACCUMULATORS
UTILISATION DE MICROCAPSULES EN TANT QU'ACCUMULATEURS DE CHALEUR LATENTE

(30) Priorität: 11.11.1997 DE 19749731
(43) Veröffentlichungstag der Anmeldung: 23.08.2000
(73) Patentinhaber: BASF AKTIENGESELLSCHAFT, 67056 Ludwigshafen (DE)
(72) Erfinder: JAHNS, Ekkehard, D-69469 Weinheim (DE); RECK, Bernd, D-67269 Grünstadt (DE)
(86) Internationale Anmeldenummer: EP9806575
(87) Internationale Veröffentlichungsnummer: WO9924525

(56) Entgegenhaltungen:
- EP-A- 0 087 859
- EP-A- 0 457 154
- EP-A- 0 623 662
- DE-A- 2 434 406
- GB-A- 2 142 135
- US-E- R E34 880
- DATABASE WPI Section Ch, Week 9541 Derwent Publications Ltd., London, GB; Class A14, AN 95-316113 XP002093266 & JP 07 213890 A (MITSUBISHI JUKOGYO KK) , 15. August 1995

## Beschreibung

Die vorliegende Erfindung betrifft die Verwendung von Mikrokapseln I mit einer oder mehreren lipophilen Substanzen als Kernmaterial, die ihren fest/flüssig Phasenübergang im Temperaturbereich von -20 bis 120°C haben und eines Polymers als Schale, das durch radikalische Polymerisation einer Monomermischung, enthaltend
- 30 bis 100 Gew.-%, bezogen auf das Gesamtgewicht der Monomeren, eines oder mehrerer C₁-C₂₄-Alkylester der Acryl- und/oder Methacrylsäure (Monomere I),
- 0 bis 80 Gew.-%, bezogen auf das Gesamtgewicht der Monomeren, eines bi- oder polyfunktionellen Monomeren (Monomere II), welches in Wasser nicht löslich oder schwer löslich ist und
- 0 bis 40 Gew.-%, bezogen auf das Gesamtgewicht der Monomeren, sonstige Monomere (Monomere III)
erhältlich ist, als Latentwärmespeicher.

Außerdem betrifft die Erfindung neue Mikrokapseln Ia, sprühgetrocknete Mikrokapseln Ia' sowie Verfahren zu ihrer Herstellung. Gegenstand der Erfindung sind ferner Formkörper und Beschichtungsmassen, enthaltend diese Mikrokapseln.

Ein wichtiges Forschungsziel zur Senkung des Energiebedarfs und Nutzung vorhandener Wärmeenergie sind Latentwärmespeicher. Sie finden vielfältige Verwendung beispielsweise als Wärmetransfermedien in Heizungs- und Kühlungssystemen oder als Wärmespeicher in Isolierstoffen oder Baustoffen. Ihre Funktionsweise beruht auf der bei fest/flüssig-Phasenübergang auftretenden Umwandlungsenthalpie, die eine Energieaufnahme oder Energieabgabe an die Umgebung bedeutet. Sie können damit einerseits zur Temperaturkonstanthaltung in einem festgelegten Temperaturbereich verwendet werden und zum anderen in geeigneter Anordnung eine Verbesserung der Wärmeisolation bewirken. Da eine Form des Speichermediums flüssig ist, wurden zur besseren Handhabung auch Mikrokapseln verwendet.

Mikrokapseln mit einer Schale aus Polymeren und Copolymeren von Methylmethacrylat sind aus der EP-A-457 154 für Reaktionsdurchschreibepapier bekannt. Eine wichtige Anforderung an diese Kapseln ist daher eine fehlerfreie Kapselhülle mit gleichmäßiger Dicke, die ein sauberes Schriftbild ermöglicht.

Außerdem beschreibt die US-A-3 615 972 ein Verfahren zur Herstellung von aufschäumbaren Mikrokapseln aus Methylmethacrylat mit Neopentan als Kapselkern und kolloidalem Siliciumdioxid als Schutzkolloid.

Die DE-A 19 654 035 beschreibt Mikrokapseln als Wärmetransfermedium, bei denen das Speichermedium mit einer Schale aus Melamin/Formaldehydharz umgeben ist.

Ebenfalls Melamin/Formaldehydharz-Mikrokapseln, jedoch mit einem speziellen Speichermedium als Kern, werden in der US-A-5 456 852-offenbart. Solche Melamin/Formaldehydharz-Kapseln weisen jedoch im Transportmedium, das in der Regel wäßrig ist, über einen längeren Zeitraum unbefriedigende Hydrolysestabilität auf.

Die US-A-4 747 240 lehrt die Verwendung von makroverkapselten Speichersubstanzen mit einer Teilchengröße oberhalb 1.000 µm deren Schale ein hochschmelzendes Harz ist, in Gips. Kapseln dieser Größe benötigen jedoch sehr dicke Wände, um nicht beim Mischen mit den Baustoffen zerstört zu werden.

Der vorliegenden Erfindung lag die Verwendung von Mikrokapseln als Latentwärmespeicher, die eine verbesserte Hydrolysestabilität aufweisen, als Aufgabe zugrunde. Sie sollten sich insbesondere zur Verwendung mit Baumaterialien eignen.

Demgemäß wurde die Verwendung der eingangs definierten Mikrokapseln I sowie neue Mikrokapseln Ia und Ia', Verfahren zu ihrer Herstellung und Formkörper sowie Beschichtungsmassen gefunden.

Die lipophilen, den späteren Kern bildenden Substanzen haben ihren fest/flüssig Phasenübergang im Temperaturbereich von -20 bis 120°C. Als geeignete Substanzen sind beispielhaft zu nennen
- aliphatische Kohlenwasserstoffverbindungen wie gesättigte oder ungesättigte C₁₀-C₄₀-Kohlenwasserstoffe, die verzweigt oder bevorzugt linear sind, z.B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan, Cyclodecan;
- aromatische Kohlenwasserstoffverbindungen wie Benzol, Naphthalin, Biphenyl, o- oder m-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan und Bromdocosan.

Weiterhin sind durchaus Mischungen dieser Substanzen geeignet, solange es nicht zu einer Schmelzpunkterniedrigung außerhalb des gewünschten Bereichs kommt.

Beispielsweise können die obengenannten halogenierten Kohlenwasserstoffe als Flammschutzmittel beigemischt werden. Ferner können auch Flammschutzmittel wie Decachlordiphenyloxid, Octabromdiphenyloxid, Antimonoxid oder in der US-A 4 797 160 beschriebene Flammschutzadditive zugesetzt werden.

Weiterhin ist es vorteilhaft, den kapselkern-bildenden Substanzen in ihnen löslichen Verbindungen zuzugeben, um so die zum Teil bei den unpolaren Substanzen auftretende Gefrierpunktserniedrigung zu verhindern. Vorteilhaft verwendet man, wie in der US-A 5 456 852 beschrieben, Verbindungen mit einem 20 bis 120°C höheren Schmelzpunkt als die eigentliche Kernsubstanz. Geeignete Verbindungen sind die oben als lipophile Substanzen erwähnten Fettsäuren, Fettalkohole und Fettamide.

Je nach Temperaturbereich, in dem die Wärmespeicher gewünscht sind, können die lipophilen Substanzen gewählt werden. Beispielsweise verwendet man für Wärmespeicher in Baustoffen in Europa bevorzugt lipophile Substanzen, deren fest/flüssig-Phasenübergang im Temperaturbereich von 0 bis 60°C liegt. So wählt man in der Regel für Außenanwendungen Einzelstoffe oder Mischungen mit Umwandlungstemperaturen von 0 bis 25°C und für Innenraumanwendungen von 15 bis 30°C. Bei Solaranwendungen in Verbindung mit Baustoffen als Speichermedium oder zur Überhitzungsvermeidung von transparenter Wärmedämmung, wie in der EP-A 333 145 beschrieben, sind vor allem Umwandlungstemperaturen von 30 bis 60°C geeignet. Vorteilhaft ist beispielsweise die Verwendung von Alkylgemischen, wie sie als technisches Destillat anfallen und als solche handelsüblich sind.

Die verwendeten Mikrokapseln werden aus 30 bis 100 Gew.-%, vorzugsweise 30 bis 95 Gew.-% eines oder mehrerer C₁-C₂₄-Alkylester der Acryl- und/oder Methacrylsäure als Monomere I aufgebaut. Außerdem können die Mikrokapseln aus bis zu 80 Gew.-%, vorzugsweise aus 5 bis 60 Gew.-%, insbesondere aus 10 bis 50 Gew.-%, eines bi- oder polyfunktionellen Monomeren als Monomere II, welche in Wasser nicht löslich oder schwer löslich sind und aus bis zu 40 Gew.-%, vorzugsweise bis zu 30 Gew.-% sonstiger Monomere III mit aufgebaut sein.

Als Monomere I eignen sich C₁-C₂₄-Alkylester der Acryl- und/oder Methacrylsäure. Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butyl- und tert.-Butylacrylat und die entsprechenden Methacrylate. Ferner ist Methacrylnitril zu nennen. Generell werden die Methacrylate bevorzugt.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen.

Unter bi- oder polyfunktionellen Monomeren versteht man Verbindungen, die wenigstens 2 nichtkonjugierte ethylenische Doppelbindungen haben.

Vornehmlich kommen Divinyl- und Polyvinylmonomere in Betracht, die eine Vernetzung der Kapselwand während der Polymerisation bewirken.

Bevorzugte bifunktionelle Monomere sind die Diester von Diolen mit Acrylsäure oder Methacrylsäure, ferner die Diallyl- und Divinylether dieser Diole.

Bevorzugte Divinylmonomere sind Ethandioldiacrylat, Divinylbenzol, Ethylenglykoldimethacrylat, 1,3-Butylenglykoldimethacrylat, Methallylmethacrylamid und Allylmethacrylat. Besonders bevorzugt sind Propandiol-, Butandiol-, Pentandiol- und Hexandioldiacrylat oder die entsprechenden Methacrylate.

Bevorzugte Polyvinylmonomere sind Trimethylolpropantriacrylat und -methacrylat, Pentaerythrittriallylether und Pentaerythrittetraacrylat.

Als Monomere III kommen sonstige Monomere in Betracht, bevorzugt sind Monomere IIIa wie Styrol, α-Methylstyrol, β-Methylstyrol, Butadien, Isopren, Vinylacetat, Vinylpropionat und Vinylpyridin.

Besonders bevorzugt sind die wasserlöslichen Monomere IIIb, z.B. Acrylnitril, Methacrylamid, Acrylsäure, Methacrylsäure, Itaconsäure, Maleinsäure, Maleinsäureanhydrid, N-Vinylpyrrolidon,

2-Hydroxyethylacrylat und -methacrylat und Acrylamido-2-methylpropansulfonsäure. Daneben sind insbesondere N-Methylolacrylamid, N-Methylolmethacrylamid, Dimethylaminoethylmethacrylat und Diethylaminoethylmethacrylat zu nennen.

Die zur erfindungsgemäßen Verwendung geeigneten Mikrokapseln lassen sich durch eine sogenannte in-situ-Polymerisation herstellen. Man stellt die Mikrokapseln in der Weise her, daß man aus den Monomeren, einem Radikalstarter und der einzukapselnden lipophilen Substanz eine stabile Öl-in-Wasser-Emulsion herstellt, in der sie als disperse Phase vorliegen. Der Anteil der Ölphase in der Ölin-Wasser-Emulsion liegt vorzugsweise bei 20 bis 60 Gew.-%.

Die stabile Emulsion kann sowohl durch Dispergieren der lipophilen Substanz in Wasser und anschließende Zugabe der Monomere und dem Radikalstarter als auch durch Dispergieren der Lösung der Monomere und des Radikalstarters in der lipophilen Substanz in Wasser hergestellt werden.

Anschließend löst man die Polymerisation der Monomeren durch Erwärmung aus, wobei die entstehenden Polymeren die Kapselwand bilden, welche die lipophile Substanz umschließt.

Als Radikalstarter für die radikalisch ablaufende Polymerisationsreaktion können die üblichen Peroxo- und Azoverbindungen, zweckmäßigerweise in Mengen von 0,2 bis 5 Gew.-%, bezogen auf das Gewicht der Monomeren, eingesetzt werden.

Als bevorzugte Radikalstarter sind tert.-Butylperoxyneodecanoat, tert.-Amylperoxypivalat, Dilauroylperoxid, tert.-Amylperoxy-2-ethylhexanoat, 2,2'-Azobis-(2,4-dimethylvaleronitril), 2,2'-Azo-bis-(2-methylbutyronitril), Dibenzoylperoxid, tert.-Butyl-per-2-ethylhexanoat, Di-tert.-butylperoxid, tert.-Butylhydroperoxid, 2,5-Dimethyl-2,5-di-(tert.-butylperoxy)hexan und Cumolhydroperoxid zu nennen.

Besonders bevorzugte Radikalstarter sind Di- (3,5,5-trimethylhexanoyl)-peroxid, 4,4'-Azobisisobutyronitril, tert.-Butylperpivalat und Dimethyl-2,2-azobisisobutyrat. Diese weisen eine Halbwertzeit von 10 Stunden in einem Temperaturbereich von 30 bis 100°C auf.

Man kann die erfindungsgemäßen Mikrokapseln in an sich bekannter Weise herstellen, z.B. nach den in der EP-A 457 154 beschriebenen Methoden.

In der Regel führt man die Polymerisation bei 20 bis 100°C, vorzugsweise bei 40 bis 80°C durch. Natürlich sollte die Dispersions- und Polymerisationstemperatur oberhalb der Schmelztemperatur der lipophilen Substanzen liegen, so daß man gegebenenfalls Radikalstarter wählt, deren Zerfallstemperatur oberhalb des Schmelzpunkts der lipophilen Substanz liegt.

Zweckmäßigerweise wird die Polymerisation bei Normaldruck vorgenommen, jedoch kann man auch bei vermindertem oder leicht erhöhtem Druck z.B. bei einer Polymerisationstemperatur oberhalb 100°C, arbeiten, also etwa im Bereich von 0,5 bis 5 bar.

Die Reaktionszeiten der Polymerisation betragen normalerweise 1 bis 10 Stunden, meistens 2 bis 5 Stunden.

Bevorzugt werden Mikrokapseln durch schrittweise Erwärmung der Öl-in-Wasser-Emulsion gebildet. Dabei ist unter schrittweise zu verstehen, daß durch Temperaturerhöhung die Reaktion durch Zerfall des Radikalstarters ausgelöst wird und weitere Erwärmung, die kontinuierlich oder in Stufen erfolgen kann, die Polymerisation gesteuert wird.

Verfahrenstechnisch geht man in der Regel so vor, daß man eine Mischung aus Wasser, Monomeren, Schutzkolloiden, den lipophilen Substanzen, Radikalstartern und gegebenenfalls Reglern nacheinander oder gleichzeitig dispergiert und unter intensivem Rühren auf die Zerfallstemperatur der Radikalstarter erhitzt.

Die Geschwindigkeit der Polymerisation kann dabei durch Wahl der Temperatur und die Menge des Radikalstarters gesteuert werden.

Zweckmäßigerweise startet man die Reaktion durch Temperaturerhöhung auf eine Anfangstemperatur und steuert die Polymerisation durch weitere Temperaturerhöhung.

Nach Erreichen der Endtemperatur setzt man die Polymerisation zweckmäßigerweise noch etwa für eine Zeit von bis zu 2 Stunden fort, um den Restmonomerengehalt abzusenken.

Im Anschluß an die eigentliche Polymerisationsreaktion bei einem Umsatz von 90 bis 99 Gew.-% ist es in der Regel vorteilhaft, die wäßrigen Mikrokapseldispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden.

Die Absenkung der Restmonomere kann weiterhin chemisch durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind, erfolgen. Als Oxidationsmittel zur redoxinitiierten Nachpolymerisation eignen sich insbesondere Wasserstoffperoxid, tert.-Butylhydroperoxid, Cumolhydroperoxid oder Alkaliperoxidsulfate. Geeignete Reduktionsmittel sind Natriumdisulfit, Natriumhydrogensulfit, Natriumdithionit, Natriumhydroxymethansulfinat, Formamidinsulfinsäure, Acetonbisulfit (= Natriumhydrogensulfit-Additionsprodukt an Aceton), Ascorbinsäure bzw. reduzierend wirkende Zuckerverbindungen, oder wasserlösliche Mercaptane, wie Mercaptoethanol. Die Nachpolymerisation mit dem Redoxinitiatorsystem wird im Temperaturbereich von 10 bis 100°C, vorzugsweise bei 20 bis 90°C durchgeführt. Die Redoxpartner können der Mikrokapseldispersion unabhängig voneinander vollständig, portionsweise bzw. kontinuierlich über einen Zeitraum von 10 Minuten bis 4 Stunden zugegeben werden. Zur Verbesserung der Nachpolymerisationswirkung des Redoxinitiatorsystems können der Mikrokapseldispersion auch lösliche Salze von Metallen wechselnder Wertigkeit, wie Eisen-, Kupfer- oder Vanadiumsalze, zugegeben werden. Häufig werden auch Komplexbildner zugegeben, die die Metallsalze unter den Reaktionsbedingungen in Lösung halten.

Bevorzugte Schutzkolloide sind wasserlösliche Polymere, da diese die Oberflächenspannung des Wassers von 73 mN/m maximal auf 45 bis 70 mN/m senken und somit die Ausbildung geschlossener Kapselwände gewährleisten sowie Mikrokapseln mit Teilchengrößen zwischen 1 und 30 µm, vorzugsweise 3 und 12 µm, ausbilden.

In der Regel werden die Mikrokapseln in Gegenwart wenigstens eines organischen Schutzkolloids hergestellt, das sowohl anionisch als auch neutral sein kann. Auch können anionische und nichtionische Schutzkolloide gemeinsam eingesetzt werden. Bevorzugt verwendet man anorganische Schutzkolloide gegebenenfalls in Mischung mit organischen Schutzkolloiden.

Organische neutrale Schutzkolloide sind Cellulosederivate wie Hydroxyethylcellulose, Carboxymethylcellulose und Methylcellulose, Polyvinylpyrrolidon, Copolymere des Vinylpyrrolidons, Gelatine, Gummiarabicum, Xanthan, Natriumalginat, Kasein, Polyethylenglykole, bevorzugt Polyvinylalkohol und partiell hydrolysierte Polyvinylacetate.

Zur Verbesserung der Stabilität der Emulsionen können anionische Schutzkolloide zugesetzt werden. Besonders wichtig ist die Mitverwendung anionischer Schutzkolloide bei einem großen Gehalt an Mikrokapseln in der Dispersion, da es ohne einen zusätzlichen ionischen Stabilisator zur Bildung von agglomerierten Mikrokapseln kommen kann. Diese Agglomerate senken die Ausbeute an nutzbaren Mikrokapseln, wenn es sich um Agglomerate kleiner Kapseln von 1 bis 3 µm Durchmesser handelt, und sie erhöhen die Bruchempfindlichkeit, wenn die Agglomerate größer als etwa 10 µm sind.

Als anionische Schutzkolloide eignen sich Polymethacrylsäure, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure.

Bevorzugte anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Die anionischen Schutzkolloide werden in der Regel in Mengen von 0,1 bis 10 Gew.-% eingesetzt, bezogen auf die Wasserphase der Emulsion.

Bevorzugt werden anorganische Schutzkolloide, sogenannte Pickering-Systeme, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Fhase verbessern. Diese Hilfsmittel sind z.B. nichtionische, anionische, kationische oder zwitterionische Tenside oder polymere Schutzkolloide, wie sie oben oder unten beschrieben sind. Zusätzlich können Puffersubstanzen zugefügt werden, um bestimmte, jeweils vorteilhafte pH-Werte der Wasserphase einzustellen. Dies kann die Wasserlöslichkeit der feinen Partikel verringern und die Stabilität der Emulsion erhöhen. Übliche Puffersubstanzen sind Phosphatpuffer, Acetatpuffer und Citratpuffer.

Die feinen, festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Die Pickering-Systeme können sowohl zuerst in die Wasserphase gegeben werden, als auch zu der gerührten Emulsion von Öl-in-Wasser zugegeben werden. Manche feinen, festen Partikel werden durch eine Fällung hergestellt. So wird das Magnesiumpyrophosphat durch Zusammengeben der wäßrigen Lösungen von Natriumpyrophosphat und Magnesiumsulfat hergestellt.

In der Regel wird das Pyrophosphat unmittelbar vor der Dispergierung durch Vereinigen einer wäßrigen Lösung eines Alkalipyrophosphats mit mindestens der stöchiometrisch erforderlichen Menge eines Magnesiumsalzes hergestellt, wobei das Magnesiumsalz in fester Form oder wäßriger Lösung vorliegen kann. In einer bevorzugten Ausführungsform wird das Magnesiumpyrophosphat durch Vereinigung wäßriger Lösungen von Natriumpyrophosphat (Na₄P₂O₇) und Magnesiumsulfat (MgSO₄·7H₂O) hergestellt.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Die kolloidalen Dispersionen sind alkalische, wäßrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert während der Öl-in-Wasser Emulsion mit einer Säure auf pH 2 bis 7 eingestellt wird.

Die anorganischen Schutzkolloide werden in der Regel in Mengen von 0,5 bis 15 Gew.-%, bezogen auf die Wasserphase, eingesetzt.

Im allgemeinen werden die organischen neutralen Schutzkolloide in Mengen von 0,1 bis 15 Gew.-%, vorzugsweise von 0,5 bis 10 Gew.-% eingesetzt, bezogen auf die Wasserphase.

Vorzugsweise wählt man die Dispergierbedingungen zur Herstellung der stabilen Öl-in-Wasser Emulsion in an sich bekannter weise so, daß die Mikrokapseln Durchmesser von 1 bis 35 µm, bevorzugt 3 bis 10 µm, haben.

Die so erhältlichen Mikrokapseln eignen sich besonders als Latentwärmespeicher in Bindebaustoffen mit mineralischen, silikatischen oder polymeren Bindemitteln. Man unterscheidet dabei zwischen Formkörpern und Beschichtungsmassen. So zeichnen sie sich durch ihre Hydrolysestabilität gegenüber den wäßrigen und oft alkalisch wäßrigen Materialien aus.

Unter einem mineralischen Formkörper wird ein Formkörper verstanden, der aus einem Gemisch aus einem mineralischen Bindemittel, Wasser, Zuschlägen sowie gegebenenfalls Hilfsmitteln nach Formgebung dadurch entsteht, daß das mineralische Bindemittel-Wasser-Gemisch als Funktion der Zeit, gegebenenfalls unter Einwirkung erhöhter Temperatur, erhärtet. Mineralische Bindemittel sind allgemein bekannt. Es handelt sich um feinteilige anorganische Stoffe wie Kalk, Gips, Ton, Lehm und/oder Zement, die durch Anrühren mit Wasser in ihre gebrauchsfertige Form überführt werden, wobei letztere beim sich selbst überlassen, an der Luft oder auch unter Wasser, gegebenenfalls unter Einwirkung erhöhter Temperatur, als Funktion der Zeit steinartig verfestigen.

Die Zuschläge bestehen in der Regel aus körnigem oder faserförmigem natürlichem oder künstlichem Gestein (Kies, Sand, Glas- oder Mineralfasern), in Sonderfällen auch aus Metallen oder organischen Zuschlägen oder aus Gemischen der genannten Zuschläge, mit Korngrößen oder Faserlängen, die dem jeweiligen Verwendungszweck in an sich bekannter Weise angepaßt sind. Häufig werden zum Zweck der Farbgebung auch Buntpigmente als Zuschläge mitverwendet.

Als Hilfsmittel kommen insbesondere solche Substanzen in Betracht, die das Erhärten beschleunigen oder verzögern oder die die Elastizität oder Porosität des verfestigten mineralischen Formkörpers beeinflussen. Hierbei handelt es sich insbesondere um Polymerisate, wie sie z.B. aus der US-A 4 340 510, der GB-PS 15 05 558, der US-A 3 196 122, der US-A 3 043 790, der US-A 3 239 479, der DE-A 43 17 035, der DE-A 43 17 036, der JP-A 91/131 533 und anderen Schriften bekannt sind.

In besonderer Weise eignen sich die Mikrokapseln zur Modifikation von mineralischen Bindebaustoffen (mörtelartige Zubereitungen), die ein mineralisches Bindemittel enthalten, das aus 70 bis 100 Gew.-% Zement und 0 bis 30 Gew.-% Gips besteht. Dies gilt insbesondere dann, wenn Zement das alleinige mineralische Bindemittel ist. Die erfindungsgemäße Wirkung ist dabei von der Zementart im wesentlichen unabhängig. Je nach Vorhaben können also Hochofenzement, Ölschieferzement, Portlandzement, hydrophobierter Portlandzement, Schnellzement, Quellzement oder Tonerdezement verwendet werden, wobei sich die Verwendung von Portlandzement als besonders günstig erweist. Bezüglich weiterer Details sei auf die DE-A-19623413 verwiesen.

In typischer Weise enthalten die Trockenzusammensetzungen mineralischer Bindebaustoffe, bezogen auf die Menge an mineralischem Bindemittel, 0,1 bis 20 Gew.-% Mikrokapseln. Die erfindungsgemäßen mineralischen Bindebaustoffe weisen gegenüber herkömmlichen Baustoffen ein sehr gutes Wärmespeichervermögen auf.

Besonders bevorzugt werden die Mikrokapseln in mineralischen Beschichtungsmassen wie Putz angewendet. Ein solcher Putz für den Innenbereich setzt sich üblicherweise aus Gips als Bindemittel zusammen. Je größer der Anteil Mikrokapseln in der Beschichtungsmasse ist, desto größer ist natürlich die wärmespeichernde und damit auch wärmeisolierende Wirkung. In der Regel beträgt das Gewichtsverhältnis Gips/Mikrokapseln von 95:5 bis 70:30. Höhere Mikrokapselanteile sind natürlich möglich.

Beschichtungen für den Außenbereich wie Außenfassaden oder Feuchträume können Zement (zementöse Putze), Kalk oder Wasserglas (mineralische oder Silikat-Putze) oder Kunststoffdispersionen (Kunstharzputze) als Bindemittel zusammen mit Füllstoffen und gegebenenfalls Pigmenten zur Farbgebung enthalten. Der Anteil der Mikrokapseln am Gesamtfeststoff entspricht den Gewichtsverhältnissen für Gipsputze.

Besonders bevorzugt werden Mikrokapseln, die in Gegenwart eines anorganischen Schutzkolloids hergestellt wurden, in mineralischen Beschichtungsmassen verwendet. Sie zeichnen sich durch eine vorteilhafte Viskosität der Beschichtungsmasse aus, die die Verarbeitung, z.B. das Verstreichen, erleichtert.

Der ausgehärtete Gipsputz zeichnet sich zusätzlich zur besseren Wärmespeicherung durch geringere Tendenz zur Wasseraufnahme und eine höhere Elastizität aus.

Ferner eignen sich die Mikrokapseln als Zusatz in polymeren Formkörpern oder polymeren Beschichtungsmassen. Hierunter sind thermoplastische und duroplastische Kunststoffe zu verstehen, bei deren Verarbeitung die Mikrokapseln nicht zerstört werden. Beispiele sind Epoxy-, Harnstoff-, Melamin-, Polyurethan und Silikonharze und auch Lacke sowohl auf Lösungsmittelbasis, High-Solid-Basis, Pulverlack oder Wasserbasislack und Dispersionsfilme. Geeignet sind die Mikrokapseln auch zur Einarbeitung in Kunststoffschäume und Fasern. Beispiele für Schäume sind Polyurethanschaum, Polystyrolschaum, Latexschaum und Melaminharzschaum.

Vorteilhafte Effekte können erzielt werden, wenn die Mikrokapseln in mineralischen oder polymeren Formkörpern verarbeitet werden, die geschäumt werden. Neben der normalerweise erwünschten Isolierwirkung kann zusätzlich die Wärmespeicherung einen Temperaturausgleich bei kurzfristigen Temperaturschwankungen bewirken. Gerade diese letztgenannte Eigenschaft begründet die vorteilhafte Verwendung der Mikrokapseln in den obengenannten Baustoffen.
Ein Gebäude, bei dem solche Baustoffe verwendet wurden, zeichnet sich durch einen gesenkten Energiebedarf aus, da Temperaturschwankungen beispielsweise zwischen Tag und Nacht durch die Wärmespeicherung genutzt werden können.

Die vorliegende Erfindung betrifft ferner ein Verfahren zur Herstellung von Mikrokapseln Ia, indem man
- 30 bis 100 Gew.-%, bezogen auf das Gesamtgewicht der Monomeren, eines oder mehrerer C₁-C₂₄-Alkylester der Acryl- und/oder Methacrylsäure (Monomere I),
- 0 bis 80 Gew.-%, bezogen auf das Gesamtgewicht der Monomeren, eines bi- oder polyfunktionellen Monomeren (Monomere II), welches in Wasser nicht löslich oder schwer löslich ist und
- 0 bis 40 Gew.-%, bezogen auf das Gesamtgewicht der Monomeren, sonstige Monomere (Monomere III),
einen Radikalstarter und die obengenannte lipophile Substanz in Gegenwart eines anorganischen Schutzkolloid in eine Öl-in-Wasser-Emulsion überführt und durch schrittweise Erwärmung polymerisiert.

Die hierdurch erhaltenen erfindungsgemäßen Mikrokapseln zeichnen sich insbesondere dadurch aus, daß sie bei Sprühtrocknung ein gut rieselfähiges Kapselpulver ergeben. Die Sprühtrocknung der Mikrokapseldispersion kann in üblicher Weise erfolgen. Im allgemeinen wird so vorgegangen, daß die Eingangstemperatur des Warmluftstroms im Bereich von 100 bis 200°C, vorzugsweise 120 bis 160°C, und die Ausgangstemperatur des Warmluftstroms im Bereich von 30 bis 90°C, vorzugsweise 60 bis 80°C, liegt. Das Versprühen der wäßrigen Polymerisatdispersion im Warmluftstrom kann beispielsweise mittels Ein- oder Mehrstoffdüsen oder über eine rotierende Scheibe erfolgen. Die Abscheidung der Polymerisatpulver erfolgt normalerweise unter Verwendung von Zyklonen oder Filterabscheidern. Die versprühte wäßrige Polymerisatdispersion und der Warmluftstrom werden vorzugsweise parallel geführt.

Das erfindungsgemäße Kapselpulver bietet neben Transport- und Verpackungsvorteilen auch dem Anwender einen viel breiteren Formulierungs- und Anwendungsspielraum. Dies ist vor allem für Baumaterialien vorteilhaft, da so ein vorheriges Durchmischen mit anderen Feststoffen wie Gips möglich ist und der Anwender in gewohnter Weise mit Wasser die geeignete Verarbeitbarkeit einstellen kann.

Die folgenden Beispiele sollen die Erfindung näher erläutern. Bei den Prozentangaben in den Beispielen handelt es sich um Gewichtsprozent.

### Beispiel 1

| Wasserphase: | |
|---|---|
| 930 g | Wasser |
| 263 g | einer 30 %igen kolloidalen Dispersion von SiO₂ in Wasser bei pH 9,8 (12 nm, 240 m²/g) |
| 18,2 g | einer 20%igen wäßrigen Lösung eines Polymers aus 59 % 2-Acrylamido-2-methylpropansulfonsäure-Na-Salz, 20 % Acrylsäure, 20 % Methylacrylat und 1 % Styrol, K-Wert: 69 |
| 10,5 g | einer 2,5 %igen, wäßrigen Kaliumdichromatlösung |

| Ölphase: | |
|---|---|
| 1100 g | C₁₈-C₂₀-Alkan (techn. Destillat) |
| 129,5 g | Methylmethacrylat |
| 57,4 g | Butandioldiacrylat |
| 1,9 g | Ethylhexylthioglykolat |
| 2,3 g | t-Butylperpivalat |

Zulauf 1: 2,73 g t-Butylhydroperoxid, 70%ig in Wasser
Zulauf 2: 0,84 g Ascorbinsäure, 0,061 g NaOH, 146 g H₂O

Bei Raumtemperatur wurde die obige Wasserphase vorgelegt und mit 14 g 10%iger Salzsäure auf pH 7 gestellt. Nach Zugabe der Ölphase wurde mit einem schnellaufenden Dissolverrührer bei 4200 Upm dispergiert und der pH mit 15 g 10 %iger Salzsäure auf pH 4 gestellt. Nach 40 Minuten Dispergierung wurde eine stabile Emulsion der Teilchengröße 2 bis 8 µm Durchmesser erhalten. Die Emulsion wurde unter Rühren mit einem Ankerrührer in 4 Minuten auf 56°C aufgeheizt, innerhalb von weiteren 20 Minuten auf 58°C, innerhalb von weiteren 60 Minuten auf 71°C und innerhalb von weiteren 60 Minuten auf 85°C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten dosiert zugegeben. Anschließend wurde abgekühlt. Die entstandene Mikrokapseldispersion besaß einen Feststoffgehalt von 45,7 % und eine mittlere Teilchengröße D(4,3) = 4,22 µm.

Die Dispersion konnte in einem Laborsprühtrockner mit Zweistoffdüse und Zyklonabscheidung mit 130°C Eingangstemperatur des Heizgases und 70°C Ausgangstemperatur des Pulvers aus dem Sprühturm problemlos getrocknet werden. Mikrokapseldispersion und Pulver zeigten beim Aufheizen in der Differentialkalorimetrie bei einer Heizrate von 1 K/Minute einen Schmelzpunkt zwischen 26,5 und 29,5°C mit einer Umwandlungsenthalpie von 130 J/g Alkanmischung.

Die Mikrokapseldispersion wurde mit einem handelsüblichen, pulverförmigen Fertigputzgips (Knauf: "Goldband Fertigmörtel, Fertigputzgips nach DIN 1168") in verschiedenen Mengenanteilen gemischt. Muster mit 10, 20, 30, 40 % Gewichtsanteil an Alkan als Latentwärmespeicher auf das feste Gipspulver wurden eingewogen und zusätzlich mit Wasser auf die übliche Verarbeitungskonsistenz eingestellt. Die Gipsmuster härteten in 5 mm Schichtdicke rißfrei aus und zeigten eine deutlich geringere Tendenz zur Wasseraufnahme sowie eine höhere Elastizität. Die Mikrokapseln in dem ausgehärteten Gipsplatten wurden nicht geschädigt und die Muster zeigten die gleiche Schmelzwärme, wie die Mikrokapseln allein, entsprechend ihrem Gehalt in der Gipsplatte.

### Beispiel 2

| Wasserphase: | |
|---|---|
| 300 g | Wasser |
| 113 g | einer Lösung aus 2,15 g Na₄P₂O₇ und 110,8 g Wasser |
| 8 g | einer 20 %igen, wäßrigen Lösung eines Polymers aus 59 % 2-Acrylamido-2-methylpropansulfonsäure-Na-Salz, 20 % Acrylsäure, 20 % Methylacrylat und 1 % Styrol, K-Wert: 69 |
| 8 g | einer 10 %igen, wäßrigen Lösung von Polyvinylalkohol (88 % verseift, mittleres Molekulargewicht 128.000) |
| 4 g | einer 2,5 %igen, wäßrigen Kaliumdichromatlösung |

| Ölphase: | |
|---|---|
| 440 g | eines techn. Destillats von C₁₄-C₁₇-Alkanen |
| 39 g | Methylmethacrylat |
| 17 g | Butandioldiacrylat |
| 1 g | t-Butylperpivalat |

Zulauf: 41 g einer Lösung aus 4,0 g MgSO₄*7 H₂O und 37 g Wasser

Bei Raumtemperatur wurde die obige Wasserphase vorgelegt und die Ölphase in einem schnellaufenden Dissolverrührer bei 3500 Upm dazugegeben und dispergiert. Jetzt wurde die Magnesiumsulfatlösung zugegeben und 50 Minuten bei 4500 Upm dispergiert. Es wurde eine stabile Emulsion der Teilchengröße 2 bis 18 µm Durchmesser erhalten. Die Emulsion wurde unter Rühren mit einem Ankerrührer in 20 Minuten auf 61°C aufgeheizt, innerhalb von weiteren 20 Minuten auf 63°C, innerhalb von weiteren 60 Minuten auf 71°C und innerhalb von weiteren 60 Minuten auf 85°C aufgeheizt. Anschließend wurde abgekühlt. Die entstandene Mikrokapseldispersion besaß einen Feststoffgehalt von 42,3 %. Die Mikrokapseldispersion zeigte beim Aufheizen in der Differentialkalorimetrie bei einer Heizrate von 5 K/Minute einen Schmelzpunkt zwischen 2 und 12°C mit einer Umwandlungsenthalpie von 140 J/g Alkanmischung.

### Beispiel 3

| Wasserphase: | |
|---|---|
| 220 g | Wasser |
| 170 g | einer Lösung aus 3,24 g Na₄P₂O₇ und 166,8 g Wasser |
| 16 g | einer 10 %igen, wäßrigen Lösung von Polyvinylalkohol (88 % verseift, mittleres Molekulargewicht 128.000) |
| 4 g | einer 2,5 %igen, wäßrigen Kaliumdichromatlösung |

| Ölphase: | |
|---|---|
| 440 g | eines techn. Destillats von C₁₄-C₁₇-Alkanen |
| 39 g | Methylmethacrylat |
| 17 g | Butandioldiacrylat |
| 1 g | t-Butylperpivalat |

Zulauf: 62 g einer Lösung aus 6,0 g MgSO₄*7 H₂O und 56 g Wasser

Bei Raumtemperatur wurde die obige Wasserphase vorgelegt und die Ölphase in einem schnellaufenden Dissolverrührer bei 5500 Upm dazugegeben und dispergiert. Jetzt wurde die Magnesiumsulfatlösung zugegeben und 30 Minuten bei 5500 Upm dispergiert. Es wurde eine stabile Emulsion der Teilchengröße 2 bis 20 µm Durchmesser erhalten. Die Emulsion wurde unter Rühren mit einem Ankerrührer in 20 Minuten auf 61°C aufgeheizt, innerhalb von weiteren 20 Minuten auf 63°C, innerhalb von weiteren 60 Minuten auf 71°C und innerhalb von weiteren 60 Minuten auf 85°C aufgeheizt. Anschließend wurde abgekühlt. Die entstandene Mikrokapseldispersion besaß einen Feststoffgehalt von 43,5 %.

### Beispiel 4

| Wasserphase: | |
|---|---|
| 140 g | Wasser |
| 40 g | einer 10 %igen, wäßrigen Lösung von Polyvinylpyrrolidon mit K-Wert: 90 |
| 10 g | einer 20 %igen, wäßrigen Lösung eines Polymers aus 59 % 2-Acrylamido-2-methylpropansulfonsäure-Na-Salz, 20 % Acrylsäure, 20 % Methylacrylat und 1 % Styrol, K-Wert: 69 |

| Ölphase: | |
|---|---|
| 157 g | eines techn. Destillats von C₁₄-C₁₇-Alkanen |
| 18,5 g | Methylmethacrylat |
| 8,2 g | Butandioldiacrylat |
| 0,27 g | Ethylhexylthioglykolat |
| 0,33 g | t-Butylperpivalat |

Bei Raumtemperatur wurde die Wasserphase vorgelegt und die Ölphase in einem schnellaufendenden Dissolverrührer bei 4500 Upm dazugegeben und 30 Minuten dispergiert. Es wurde eine stabile Emulsion der Teilchengröße 2 bis 25 µm Durchmesser erhalten. Die Emulsion wurde unter Rühren mit einem Ankerrührer auf 80°C aufgeheizt und 5 Stunden gehalten. Anschließend wurde abgekühlt. Die entstandene Mikrokapseldispersion besaß einen Feststoffgehalt von 36,1 %.

### Beispiel 5

| Wasserphase: | |
|---|---|
| 914 g | Wasser |
| 536 g | einer 10 %igen, wäßrigen Lösung von Polyvinylalkohol (88 % verseift, mittleres Molekulargewicht 128.000) |

| Ölphase: | |
|---|---|
| 1256 g | Octadecan |
| 148 g | Methylmethacrylat |
| 65,6 g | Butandioldiacrylat |
| 1,9 g | Ethylhexylthioglykolat |
| 2,64 g | t-Butylperpivalat |

Zulauf 1: 3,12 g t-Butylhydroperoxid, 70 %ig in Wasser
Zulauf 2: 0,96 g Ascorbinsäure, 0,07 g NaOH, 160 g H₂O

Bei 30°C wurde die obige Wasserphase vorgelegt und die Ölphase in einem Schnellaufenden Dissolverrührer bei 3500 Upm dazugegeben und 20 Minuten dispergiert. Es wurde eine stabile Emulsion der Teilchengröße 3 bis 8 µm Durchmesser erhalten. Die Emulsion wurde unter Rühren mit einem Ankerrührer in 20 Minuten auf 61°C aufgeheizt, innerhalb von weiteren 20 Minuten auf 63°C, innerhalb von weiteren 60 Minuten auf 71°C und innerhalb von weiteren 60 Minuten auf 85°C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten dosiert zugegeben. Anschließend wurde abgekühlt. Die entstandene Mikrokapseldispersion besaß einen Feststoffgehalt-von 49,2 %.

Die Mikrokapseldispersion wurde mit einem handelsüblichen, pulverförmigen Fertigputzgips (Knauf: "Goldband Fertigmörtel, Fertigputzgips nach DIN 1168") in verschiedenen Mengenanteilen gemischt. Muster mit 10, 20, 30, 40 % Gewichtsanteil an Alkan als Latentwärmespeicher auf das feste Gipspulver wurden eingewogen und zusätzlich mit Wasser auf die übliche Verarbeitungskonsistenz eingestellt. Die so hergestellten Gipsmuster härteten in 5 mm Schichtdicke rißfrei aus und zeigten eine deutlich geringere Tendenz zur Wasseraufnahme sowie eine höhere Elastizität. Die Mikrokapseln in dem ausgehärteten Gipsplatten wurden nicht geschädigt und die Muster zeigten die gleiche Schmelzwärme, wie die Mikrokapseln allein, entsprechend ihrem Gehalt in der Gipsplatte.

### Beispiel 6

Es wurde wie in Beispiel 4 verfahren, nur statt des 2-Acrylamido-2-methylpropansulfonsäurepolymers wurden 10 g einer 30 %igen, wäßrigen Lösung eines Phenolsulfonsäure-Formaldehyd-Kondensats verwendet. Statt 18,5 g Methylmethacrylat wurden 16,5 g Methylmethacrylat und 2 g Styrol verwendet. Die entstandene Mikrokapseldispersion besitzt einen Feststoffgehalt von 39,4 %.

### Beispiel 7

| Wasserphase: | |
|---|---|
| 114,2 g | Wasser |
| 67 g | einer 10 %igen, wäßrigen Lösung von Polyvinylalkohol (88 % verseift, mittleres Molekulargewicht 128.000) |

| Ölphase: | |
|---|---|
| 155,4 g | Octadecan |
| 18,5 g | Methylmethacrylat |
| 8,2 g | Butandioldiacrylat |
| 1,6 g | Stearinsäure |
| 0,33 g | t-Butylperpivalat |

Bei 30°C wurde die obige Wasserphase vorgelegt und die Ölphase in einem schnellaufenden Dissolverrührer bei 3500 Upm dazugegeben und 20 Minuten dispergiert. Es wurde eine stabile Emulsion der Teilchengröße 2 bis 10 µm Durchmesser erhalten. Die Emulsion wurde unter Rühren mit einem Ankerrührer in 20 Minuten auf 61°C aufgeheizt, innerhalb von weiteren 20 Minuten auf 63°C, innerhalb von weiteren 60 Minuten auf 71°C und innerhalb von weiteren 60 Minuten auf 85°C aufgeheizt. Anschließend wurde abgekühlt. Die entstandene Mikrokapseldispersion besitzt einen Feststoffgehalt von 51,7 %.

Die Mikrokapseldispersion wurde an der Luft getrocknet und in einer Mettler Toledo DSC 820 mit Heiz- und Kühlraten von 10 K/min gemessen. Beim 2. Aufheizen wurde eine Schmelzwärme von 222 J/g bei einem Schmelzpunkt von 26,3°C gefunden. Beim 2. Abkühlen wurde eine Kristallisationswärme von 220 J/g bei einem Kristallisationspunkt von 23°C gefunden.

## Patentansprüche

1. Verwendung von Mikrokapseln I mit einer oder mehreren lipophilen Substanzen als Kernmaterial, die ihren fest/ flüssig Phasenübergang im Temperaturbereich von -20 bis 120°C haben und eines Polymers als Schale, das durch radikalische Polymerisation einer Monomermischung, enthaltend
- 30 bis 100 Gew.-%, bezogen auf das Gesamtgewicht der Monomeren, eines oder mehrerer C₁-C₂₄-Alkylester der Acryl- und/oder Methacrylsäure (Monomere I),
- 0 bis 80 Gew.-%, bezogen auf das Gesamtgewicht der Monomeren, eines bi- oder polyfunktionellen Monomeren (Monomere II), welches in Wasser nicht löslich oder schwer löslich ist und
- 0 bis 40 Gew.-%, bezogen auf das Gesamtgewicht der Monomeren, sonstige Monomere (Monomere III)
erhältlich ist, als Latentwärmespeicher.

2. Verwendung von Mikrokapseln I nach Anspruch 1, wobei die Mikrokapseln durch Erwärmung einer Öl-in-Wasser-Emulsion, in der die Monomere, ein Radikalstarter und die lipophile Substanz als disperse Phase vorliegen, erhältlich sind.

3. Verwendung von Mikrokapseln I nach Anspruch 1 oder 2, wobei die Mikrokapseln durch kontinuierliche oder schrittweise Erwärmung erhältlich sind.

4. Verwendung von Mikrokapseln I nach den Ansprüchen 1 bis 3, wobei die Mikrokapseln durch Polymerisation der Monomeren, die mit dem Radikalstarter und der lipophilen Substanz als disperse Phase mit einem anorganischen Schutzkolloid einer Öl-in-Wasser-Emulsion vorliegen, erhältlich sind.

5. Verwendung von Mikrokapseln I nach den Ansprüchen 1 bis 4 als Latentwärmespeicher in mineralischen Formkörpern oder Beschichtungsmassen.

6. Verwendung von Mikrokapseln I nach den Ansprüchen 1 bis 5 als Latentwärmespeicher in polymeren Formkörpern oder Beschichtungsmassen.

7. Mineralische Formkörper enthaltend Mikrokapseln gemäß den Ansprüchen 1 bis 5 sowie sonstige in mineralischen Formkörpern übliche Zusatzstoffe.

8. Mineralische Beschichtungsmassen, enthaltend Mikrokapseln gemäß den Ansprüchen 1 bis 5 sowie sonstige in mineralischen Beschichtungsmassen übliche Zusatzstoffe.

9. Polymere Formkörper, enthaltend Mikrokapseln gemäß den Ansprüchen 1 bis 4 oder 6 sowie sonstige in polymeren Formkörpern übliche Zusatzstoffe.

10. Polymere Beschichtungsmassen, enthaltend Mikrokapseln gemäß den Ansprüchen 1 bis 4 oder 6 sowie sonstige in polymeren Beschichtungsmassen übliche Zusatzstoffe.

11. Verfahren zur Herstellung von Mikrokapseln Ia gemäß Anspruch 1, indem man
- 30 bis 100 Gew.-%, bezogen auf das Gesamtgewicht der Monomeren, eines oder mehrerer C₁-C₂₄-Alkylester der Acryl- und/oder Methacrylsäure (Monomere I),
- 0 bis 80 Gew.-%, bezogen auf das Gesamtgewicht der Monomeren, eines bi- oder polyfunktionellen Monomeren (Monomere II), welches in Wasser nicht löslich oder schwer löslich ist und
- 0 bis 40 Gew.-%, bezogen auf das Gesamtgewicht der Monomeren, sonstige Monomere (Monomere III),
einen Radikalstarter und die lipophile Substanz mit einem anorganischen Schutzkolloid in eine Öl-in-Wasser-Emulsion überführt und durch schrittweise Erwärmung polymerisiert.

12. Verfahren nach Anspruch 11, **dadurch gekennzeichnet**, daß man die Mikrokapseldispersion anschließend sprühtrocknet.

13. Mikrokapseln Ia erhältlich nach dem Verfahren gemäß Anspruch 11 oder 12.

## Claims

1. The use as latent heat storage media of microcapsules I comprising as core materials one or more lipophilic substances whose solid/liquid phase transition is within the range from -20 to 120°C and as shell a polymer obtainable by free-radical polymerization of a monomer mixture comprising
- from 30 to 100% by weight, based on the overall weight of the monomers, of one or more C₁-C₂₄-alkyl esters of acrylic and/or methacrylic acid (monomer I),
- from 0 to 80% by weight, based on the overall weight of the monomers, of a bi- or polyfunctional monomer (monomer II) which is insoluble or of low solubility in water, and
- from 0 to 40% by weight, based on the overall weight of the monomers, of other monomers (monomers III).

2. The use as claimed in claim 1 of microcapsules I obtainable by heating an oil-in-water emulsion in which the monomers, a free-radical initiator and the lipophilic substance are present as disperse phase.

3. The use as claimed in claim 1 or 2 of microcapsules I obtainable by continuous or stepwise heating.

4. The use as claimed in any of claims 1 to 3 of microcapsules I obtainable by polymerizing the monomers, which together with the free-radical initiator, the lipophilic substance and an inorganic protective colloid are present as disperse phase of an oil-in-water emulsion.

5. The use as claimed in any of claims 1 to 4 of microcapsules I as latent heat storage media in shaped mineral articles or coating compositions.

6. The use as claimed in any of claims 1 to 5 of microcapsules I as latent heat storage media in polymeric shaped articles or coating compositions.

7. A shaped mineral article comprising microcapsules as set forth in any of claims 1 to 5 along with other customary additives to shaped mineral articles.

8. A mineral coating composition comprising microcapsules as set forth in any of claims 1 to 5 along with other customary additives to mineral coating compositions.

9. A polymeric shaped article comprising microcapsules as set forth in any of claims 1 to 4 or 6 along with other customary additives to polymeric shaped articles.

10. A polymeric coating composition comprising microcapsules as set forth in any of claims 1 to 4 or 6 along with other customary additives to polymeric coating compositions.

11. A process for preparing microcapsules Ia as set forth in claim 1 by converting
- from 30 to 100% by weight, based on the overall weight of the monomers, of one or more C₁-C₂₄-alkyl esters of acrylic and/or methacrylic acid (monomer I),
- from 0 to 80% by weight, based on the overall weight of the monomers, of a bi- or polyfunctional monomer (monomer II) which is insoluble or of low solubility in water, and
- from 0 to 40% by weight, based on the overall weight of the monomers, of other monomers (monomers III),
a free-radical initiator and the lipophilic substance, together with an inorganic protective colloid, to an oil-in-water emulsion and polymerizing said emulsion by stepwise heating.

12. A process as claimed in claim 11, wherein the microcapsule dispersion is subsequently spray-dried.

13. A microcapsule Ia obtainable by a process as claimed in claim 11 or 12.

## Revendications

1. Utilisation, en tant qu'accumulateur de chaleur latente, de microcapsules I comportant une ou plusieurs substances lipophiles en tant que matériau de coeur, qui ont leur transition de phase solide/liquide dans la plage de températures de -20 à 120°C, et un polymère en tant que gaine, que l'on peut obtenir par polymérisation radicalaire d'un mélange de monomères contenant
- de 30 à 100 % en poids, par rapport au poids total des monomères, d'un ou plusieurs esters alkyliques en C₁-C₂₄ de l'acide acrylique et/ou de l'acide méthacrylique (Monomère I),
- de 0 à 80 % en poids, par rapport au poids total des monomères, d'un monomère bi- ou polyfonctionnel (Monomère II) qui n'est pas soluble ou est difficilement soluble dans l'eau, et
- de 0 à 40 % en poids, par rapport au poids total des monomères, d'autres monomères (Monomère III).

2. Utilisation de microcapsules I selon la revendication 1, les microcapsules pouvant être obtenues par chauffage d'une émulsion huile-dans-l'eau dans laquelle les monomères, un amorceur radicalaire et la substance lipophile sont présents sous forme d'une phase dispersée.

3. Utilisation de microcapsules I selon la revendication 1 ou 2, dans laquelle les microcapsules peuvent être obtenues par chauffage continu ou discontinu.

4. Utilisation de microcapsules I selon les revendications 1 à 3, dans laquelle les microcapsules peuvent être obtenues par polymérisation des monomères, qui avec l'amorceur radicalaire et la substance lipophile se présentent sous forme d'une phase dispersée avec un colloïde protecteur inorganique d'une émulsion huile-dans-l'eau.

5. Utilisation de microcapsules I selon les revendications 1 à 4, en tant qu'accumulateurs de chaleur latente dans des objets façonnés ou des produits de revêtement minéraux.

6. Utilisation de microcapsules I selon les revendications 1 à 5, en tant qu'accumulateurs de chaleur latente dans des objets façonnés ou des masses de revêtement polymères.

7. Objets façonnés minéraux contenant des microcapsules selon les revendications 1 à 5, ainsi que d'autres additifs usuels dans les objets façonnés minéraux. minéraux.

8. Masses de revêtement minérales contenant des microcapsules selon les revendications 1 à 5, ainsi que d'autres additifs usuels dans les masses de revêtement minérales.

9. Objets façonnés polymères contenant des microcapsules selon les revendications 1 à 4 ou 6, ainsi que d'autres additifs usuels dans les objets façonnés polymères.

10. Masses de revêtement polymères contenant des microcapsules selon les revendications 1 à 4 ou 6, ainsi que d'autres additifs usuels dans les masses de revêtement polymères.

11. Procédé de préparation de microcapsules Ia selon la revendication 1, dans lequel on convertit en une émulsion huile-dans-l'eau
- de 30 à 100 % en poids, par rapport au poids total des monomères, d'un ou plusieurs esters alkyliques en C₁-C₂₄ de l'acide acrylique et/ou de l'acide méthacrylique (Monomère I),
- de 0 à 80 % en poids, par rapport au poids total des monomères, d'un monomère bi- ou polyfonctionnel (Monomère II) qui n'est pas soluble ou est difficilement soluble dans l'eau, et
- de 0 à 40 % en poids, par rapport au poids total des monomères, d'autres monomères (Monomère III),
un amorceur radicalaire et la substance lipophile avec un colloïde protecteur inorganique, et on les polymérise par chauffage discontinu.

12. Procédé selon la revendication 11, **caractérisé en ce qu**'on procède ensuite à un séchage par atomisation de la dispersion de microcapsules.

13. Microcapsules Ia pouvant être préparées par le procédé selon la revendication 11 ou 12.
